# EUROPÄISCHE PATENTSCHRIFT

(11) **EP 1 696 095 B1**
(45) Veröffentlichungstag und Bekanntmachung des Hinweises auf die Patenterteilung: **28.10.2009**
(21) Anmeldenummer: 06009514.8
(22) Anmeldetag: 09.05.2006
(51) Int. Cl.: E05D 15/06, B65G 1/02, E05F 15/14

(54) **Regallagertor**
Shelf storage gate
Porte pour un magazin à rayonnage

(30) Priorität: 06.10.2005 AT 16342005
(43) Veröffentlichungstag der Anmeldung: 30.08.2006
(73) Patentinhaber: LTW Intralogistics GmbH, 6961 Wolfurt (AT)
(72) Erfinder: Gerber, Urs, 6900 Bregenz (AT); Eberle, Konrad, 6900 Bregenz (AT)
(74) Vertreter: Torggler, Paul Norbert

(56) Entgegenhaltungen:
- EP-A- 0 648 707
- AT-B- 410 934
- DE-A1- 4 035 150
- FR-A- 2 127 624
- US-A1- 2003 205 002

## Beschreibung

Die Erfindung betrifft ein Regallager mit mehreren Palettenstellplätzen und einem Tor, wobei das Tor zumindest zwei Teilabschnitte aufweist, die wahlweise alle gemeinsam, einzeln oder in Gruppen öffenbar sind.

Gattungsgemäße Regallager werden häufig zur Lagerung und Speicherung von unterschiedlichen Gütern verwendet, wobei in der Regel die zu lagernden Güter auf Paletten positioniert werden und die Paletten samt Lagergut in das Regallager eingebracht werden und auf dem Palettenstellplatz abgestellt werden. Häufig werden solche Regallager als sogenannte Hochregallager konstruiert, d.h. es werden Palettenstellplätze nebeneinander und übereinander angeordnet. In einem Kommissionierlager werden die Paletten vom Regalbediengerät dem Bediener zum Kommissionieren bereitgestellt. Sicherheitsgründe erfordern, dass jeder Palettenplatz gegenüber dem Regalbediengerät abgesichert ist. Da jede Palette einzeln bedient wird, weist also jede Palette ein eigenes Tor auf. Um die Palette in den Palettenstellplatz einbringen zu können bzw. aus dem Palettenstellplatz entnehmen zu können, ist es erforderlich, dass beidseitig der Palette Sicherheitsabstände vorgesehen sind. Aufgrund von Abweichungen und Deformationen bzw. einer nicht idealen Einbringung der Palette in den Stellplatz sowie aus dem Grund, dass Regalbediengeräte einen gewissen Operationsspielraum benötigen, wurden Normen entwickelt, die die Größe der erforderlichen Sicherheitsabstände festlegen.

Nachteilig am Stand der Technik, wie er beispielsweise in der AT 410 934 beschrieben ist, ist der Umstand, dass der Platzbedarf gattungsgemäßer Regallager sehr groß ist. Die US 2003/020 5002 zeigt ein mehrgliedriges Schiebetor. Die DE 40 35 150 A1 zeigt eine Schiebetürkombination für einen Schrank. In der EP 0 648 707 A1 ist ein Hochregallager mit mehreren Palettenstellplätzen offenbart. Die FR 2 127 624 zeigt ein mehrteiliges Tor.

Aufgabe der Erfindung ist es daher, ein Regallager der eingangs genannten Gattung mit verringertem Platzbedarf zu schaffen.

Erfindungsgemäß wird dies durch ein Regallager mit mehreren Palettenstellplätzen und einem Tor realisiert, bei dem das Tor zumindest zwei Teilabschnitte aufweist, die wahlweise alle gemeinsam, einzeln oder in Gruppen öffenbar sind, wobei pro Palettenstellplatz ein Teilabschnitt des Tores vorgesehen ist, wobei die Teilabschnitte lösbar miteinander koppelbar sind, wobei die Teilabschnitte in einer gemeinsamen Schiene verschiebbar sind. Bevorzugt ist angedacht, dass die Teilabschnitte in einer Ebene liegen.

Im Gegensatz zu Regallagern mit mehreren Palettenstellplätzen und nur einem Tor hat ein erfindungsgemäßes Regallager den Vorteil, dass durch die Unterteilung in Teilabschnitte das Tor stets so öffenbar ist, dass immer nur ein Palettenstellplatz geöffnet ist. Dadurch wird die Gefahr vermindert, dass dem zu bearbeitenden Palettenstellplatz benachbarte Palettenstellplätze mit eingebrachter Palette und Lagergut nicht aus dem Regallager fallen können.

Dabei hat es sich als günstig herausgestellt, wenn das Tor ein Schiebetor ist. Insbesondere ist es vorteilhaft, wenn die Teilabschnitte im Wesentlichen parallel verschiebbar sind. Wenn das Tor seitlich verschiebbar ist bzw. die Teilabschnitte im Wesentlichen parallel zueinander verschiebbar sind, lässt sich die Konstruktion des Tores und des Regallagers vereinfachen und die Fertigung ist verhältnismäßig kostengünstig, da ein seitliches Verschieben des Tores bzw. der Teilabschnitte geringere Kräfte auf das Tor ausübt, als z.B. beim Heben oder Senken eines Tores auftreten.

Erfindungsgemäß ist in einem Ausführungsbeispiel vorgesehen, dass die Teilabschnitte nur in eine Richtung verschiebbar sind. Die Verschiebbarkeit in nur eine Richtung erhöht einerseits den Sicherheitsaspekt, insbesondere dann, wenn jeweils mehrere Palettenstellplätze mit einem Tor benachbarte Palettenstellplätze mit ebenfalls einem Tor aufweisen. Dadurch ist die Kollisionsgefahr mit anderen (benachbarten) Toren vermieden. Außerdem ist die Verschiebbarkeit in nur eine Richtung für Bediener des Regallagers sicherer, da sie nur auf die Öffnung des Tores von einer Seite Rücksicht nehmen müssen.

Günstig hat es sich außerdem erwiesen, wenn die Teilabschnitte lösbar miteinander koppelbar sind. Eine lösbare Kopplung der Teilabschnitte ermöglicht ein besonders einfaches Öffnen des Tores bzw. des gewünschten Palettenstellplatzes. Weiters ist vorgesehen, dass ein Teilabschnitt lösbar ortsfest koppelbar ist. In einer bevorzugten Ausführungsvariante ist vorgesehen, dass die Koppelung über einen Klinken-Bolzen-Mechanismus erfolgt. Wenn - wie bei derartigen Regallagern üblich - automatische Regalbediengeräte vorgesehen sind, kann die Entkoppelung des Kopplungsmechanismus über ein Regalbediengerät erfolgen.

Um den Sicherheitsabstand entsprechend minimieren zu können, ist in einem Ausführungsbeispiel vorgesehen, dass alle Teilabschnitte einen gemeinsamen Antrieb aufweisen. Insbesondere in Kombination mit einer lösbaren Kuppelung der unterschiedlichen Teilabschnitte lassen sich durch Entkoppeln eines oder mehrerer Teilabschnitte die verbleibende Teilabschnitte besonders einfach verschieben, während die entkoppelten Teilabschnitte in ihrer Ausgangsposition bleiben.

Weiters ist in einem weiteren Ausführungsbeispiel vorgesehen, dass ein Teilabschnitt breiter ist als die übrigen Teilabschnitte. Die Minimierung der Sicherheitsabstände zwischen zwei Palettenstellplätzen und eine entsprechende Unterteilung des Tores in Teilabschnitte machen eine solche unterschiedliche Gestaltung der Teilabschnitte günstig, da so der Platzbedarf minimiert werden kann.

Weiters ist vorgesehen, dass zumindest zwei Palettenstellplätze beidseitig von Regalstehern begrenzt sind, wobei in einer bevorzugten Variante drei Palettenstellplätze jeweils beidseitig von Regalstehern begrenzt sind. Wie eingangs bereits erwähnt ist außerdem vorgesehen, dass zwischen Palettenstellplätzen sowie zwischen Palettenstellplatz und Regalsteher Sicherheitsabstände vorgesehen sind. Insbesondere bei der Ausführung mit unterschiedlich breiten Teilabschnitten des Tores ist vorgesehen, dass die Breite des breiteren Teilabschnittes des Tores die Summe aus einer Palettenstellplatzbreite plus zwei Sicherheitsabstände beträgt und jeder weitere Teilabschnitt eine Breite aufweist, die die Summe aus einer Palettenstellplatzbreite plus ein Sicherheitsabstand beträgt.

Die maßgebliche Norm für gattungsgemäße Regallager ist festgelegt von der FEM 9.831 (Fédération Européenne de la Manutention, Sektion IX), in der Berechnungsgrundlagen für Regalbediengeräte, Toleranzen, Verformungen und Freimaße im Hochregallager festgelegt werden. Dabei werden unterschiedliche Sicherheitsabstände festgelegt, die davon abhängen, wie die Steuerung des Hochregallagers bzw. des Regalbediengerätes erfolgt. Unter Regalbediengeräten versteht man in der Regel Fahrzeuge zum Kommissionieren und Einlagern und Transportieren von Paletten. Gleichbedeutend sind erfindungsgemäß auch Verschiebewagen vorgesehen, die sich primär dadurch von Regalbediengeräten unterscheiden, dass sie Paletten nicht in vertikaler sondern nur in horizontaler Ebene transportieren können, d.h., Regalbediengeräte werden insbesondere für Hochregallager verwendet. Unterschieden werden dabei manuelle Steuerung, teil- oder vollautomatisierte Steuerung mit Koordinatenpositionierung und teil- oder vollautomatische Steuerung mit Koordinatenpositionierung und zusätzlicher Fachfeinpositionierung in unterschiedlichen Richtungen. Solche Regallager werden mit sogenannten Ladehilfsmitteln in der Form von Paletten bzw. im Besonderen mit sogenannten Euro-Pool-Paletten beladen. Das Regallager wird also von der Breite der entsprechenden Palette definiert, wobei die Euro-Pool-Palette eine Breite von 800 mm aufweist. Entsprechend ist ein Palettenstellplatz für ein Regallager für Euro-Pool-Paletten 800 mm breit. Die in der FEM 9.831 festgelegten Sicherheitsabstände seitlich der Palettenstellplätze ergeben sich aus den Fachfreimaßen x_{3,1} (zwischen Ladeeinheit und Steher) und x₄ (zwischen Ladeeinheiten untereinander) und betragen je nach Steuerung des Regalbediengerätes zwischen etwa 30 mm und 80 mm. Die genaue Berechnung des Fachfreimaßes ergibt sich aus der sogenannten Worst-Case-Methode und ist der FEM 9.831 festgelegt. Für die genauen Berechungen bzw. Definitionen wird daher auf die FEM 9.831 in seiner Gesamtheit verwiesen.

Erfindungsgemäß ist weiters vorgesehen, dass die Teilabschnitte in einer gemeinsamen Schiene verschiebbar sind. Beim Stand der Technik sind die Tore der einzelnen Palettenstellplätze bzw. Paletten alternierend in einer vorderen und hinteren Schiene gelagert.

Üblicherweise ist vorgesehen, dass für ein erfindungsgemäßes Regallager die Sicherheitsabstände etwa 60 Millimeter betragen.

In einem bevorzugten Ausführungsbeispiel ist vorgesehen, dass pro Palettenstellplatz ein Teilabschnitt des Tores vorgesehen ist. Dies ermöglicht es, besonders einfach, dass durch das Öffnen der einzelnen Teilabschnitte stets nur ein Palettenstellplatz geöffnet ist und für ein Regalbediengerät zugänglich ist; die Gefahr des Herausfallens von Paletten samt Ladegut aus benachbarten Palettenstellplätzen ist damit fast nicht mehr möglich. Bevorzugt ist vorgesehen, dass zumindest eine Kante eines Teilabschnittes des Tores mit einer Kante des dahinter liegenden Palettenstellplatzes fluchtet. Anders ausgedrückt liegen bei einer Betrachtungsweise von vorne und bei geschlossenem Tor eine Kante eines dahinter liegenden Palettenstellplatzes bzw. die Kante der sich auf dem Stellplatz befindlichen Palette (P) und in einer fluchtenden Linie.

In diesem Zusammenhang hat es sich außerdem als günstig erwiesen, wenn die Teilabschnitte des Tores derart verschiebbar sind, dass die lichte Öffnung des Tores der Summe aus einer Palettenstellplatzbreite plus zwei Sicherheitsabständen entspricht. Weiters ist vorgesehen, dass das Verschieben der Teilabschnitte durch ein Regalbediengerät oder einen Verschiebewagen steuerbar ist. Insbesondere ist es vorteilhaft, wenn das Tor fernsteuerbar ist. Durch die Fernsteuerung des Tores bzw. durch die Steuerung vom Regalbediengerät aus kann das Tor bzw. die Torabschnitte unmittelbar vor Eintreffen des Regalbediengerätes geöffnet werden bzw. das geöffnete Tor (Torabschnitte) unmittelbar nach Abgabe der Palette an den Palettenstellplatz geschlossen werden.

Insbesondere ist vorgesehen, dass das Regallager ein Hochregallager ist. Vorteilhafterweise weist das Hochregallager daher mehrere übereinander angeordnete Palettenstellplätze auf.

Ein bevorzugtes Ausführungsbeispiel sieht vor, dass drei seitlich benachbarte Palettenstellplätze von Regalstehern begrenzt werden. Dies hat sich aus Gewichtsgründen als günstig herausgestellt.

Außerdem ist vorgesehen, dass das Tor in einer Schiene führbar ist, wobei das Tor z.B. in der oberhalb des Tores am Regallager angebrachten Schiene eingehängt ist.

Weitere Details und Vorteile der Erfindung werden anhand der Figuren und Figurenbeschreibungen erläutert. Dabei zeigt:
- Fig. 1a, 1b: ein Regallager nach bekanntem Stand der Technik im Grundriss in geschlossenem Zustand (1a) und mit einem geöffnetem Palettenstellplatz (1b),
- Fig. 2a, 2b: ein erfindungsgemäßes Regallager im Grundriss (2a) und mit einem geöffnetem Palettenstellplatz (2b) und
- Fig. 3a, 3b, 3c, 3d: Detailansichten bzw. Ausschnitte eines Tores eines erfindungsgemäßen Regallagers in der Sicht von vorne (3a), von der Seite (3b), in Draufsicht (3c) sowie eine Detailansicht der Kopplung der Einzelabschnitte (3d) aus Fig. 3c.

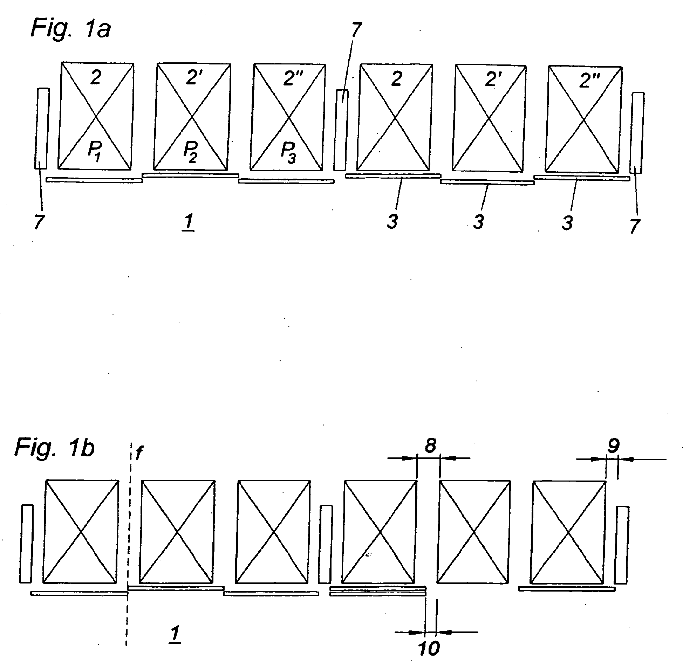

Der in den Fig. 1 a und 1 b dargestellte bekannte Stand der Technik zeigt ein Regallager 1 mit mehreren Palettenstellplätzen 2, 2', 2" wobei jeweils drei Palettenstellplätze 2, 2', 2" beidseitig von Regalstehern 7 begrenzt werden. Auf jedem Palettenstellplatz 2, 2', 2" befindet sich eine Palette P₁, P₂, P₃ (auch in den übrigen Zeichnungen). Jeder Palettenstellplatz 2, 2', 2" weist ein eigenes Tor 3 auf. In Fig. 1a ist das vollständig geschlossene Regallager 1 mit sechs Palettenstellplätzen 2, 2', 2" in einer Ebene gezeigt. In Fig. 1b ist ein teilweise geöffnetes Regallager 1 gezeigt, wobei ein Tor 3 eines mittleren Palettenstellplatzes 2' seitlich verschoben ist, sodass ein Regalbediengerät (nicht gezeigt) Zugang zum Palettenstellplatz 2' hat. Wie man an der Fig. 1b deutlich erkennen kann, ist bei geöffnetem Zustand des Tores 3, um zum mittleren Stellplatz 2' zu gelangen, links und rechts des Stellplatzes 2' jeweils ein Sicherheitsabstand 10 zu den Toren 3 angeordnet. Da die Tore 3 breiter sind als der jeweilige Palettenstellplatz 2, 2', 2", überragen die Tore 3 den eigentlichen Palettenstellplatz 2, 2', 2" beidseitig. Deutlich ist daher erkennbar, dass zwischen zwei Palettenstellplätzen 2, 2' ein bestimmter Palettenabstand 8 vorhanden ist,
wobei der erforderliche Sicherheitsabstand 10 zwischen dem Palettenstellplatz 2 und dem benachbarten Tor 3 nur die Hälfte des Palettenstellplatzabstandes 8 beträgt. Von außen steht dem Regalbediengerät als lichte Öffnung genau die Breite des Palettenstellplatzes 2' plus zweimal (je links und rechts einmal) der Sicherheitsabstand 10 zur Verfügung. Im Inneren des Regallagers würden allerdings die Breite des Palettenstellplatzes 2' plus viermal der Sicherheitsabstand 10 (oder zweimal der Palettenabstand 8) zur Verfügung stehen. Beim Stand der Technik ist ebenfalls erkennbar, dass die Tore 3 alternierend in einer vorderen oder einer hinteren Schiene geführt werden. Beim Öffnen eines Tores 3 kann dieses Tor nach links oder rechts verschoben werden und wird vor bzw. hinter das benachbarte Tor geschoben. Soll beispielsweise das Tor 3 vom Palettenstellplatz 2 in der zweiten Dreiergruppe von Palettenstellplätzen der Fig. 1a geöffnet werden, so kann das Tor einerseits nach links hinter das Tor 3 vom Palettenstellplatz 2' geschoben werden oder nach rechts hinter das Tor 3 vom Palettenstellplatz 2' der zweiten Gruppe an Palettenstellplätzen. Analoges gilt für die übrigen Tore bzw. Abstellplätze. Soll z.B. das Tor 3 vom Palettenstellplatz 2" der ersten Palettenstellplatzgruppe verschoben werden, so wird das Tor einfach vor das Tor 3 vom Palettenstellplatz 2" der ersten Palettenstellplatzgruppe geschoben oder vor das Tor 3 vom Palettenstellplatz 2 der zweiten Palettenabstellgruppe.

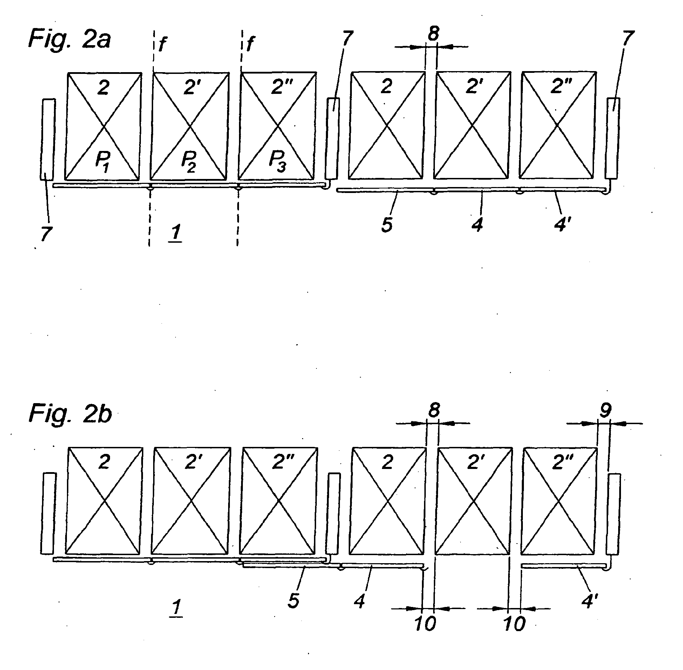

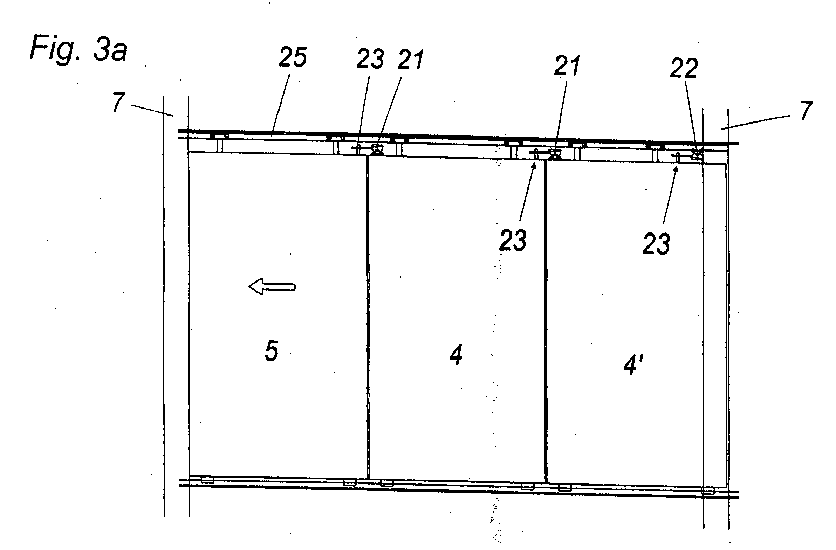

In Fig. 2a und 2b ist das erfindungsgemäße Regallager 1 mit Tor 3, das mehrere Teilabschnitte 4, 4', 5 aufweist, gezeigt. In der Fig. 2a ist wiederum das Regallager 1 mit mehreren Palettenstellplätzen 2, 2', 2" in geschlossener Stellung in Draufsicht (von einer Ebene) gezeigt. Auf manche der Bezugszeichen wird hier nicht noch einmal eingegangen, zumal diese bereits im Rahmen der Fig. 1 beschrieben worden sind. Der Palettenabstand 8 zwischen zwei Palettenstellplätzen 2, 2' ist erkennbar verringert gegenüber der Fig. 1. Dies ist am besten illustriert anhand der Fig. 2b, in dem ein Regallager 1 mit einem geöffneten Palettenstellplatz 2' gezeigt ist. Das Tor 3 ist in jeweils drei Teilabschnitte 4, 4', 5 unterteilt und zum Öffnen des mittleren Palettenstellplatzes 2' ist der Teilabschnitt 4 und 5 als Gruppe geöffnet bzw. verschoben, während der Teilabschnitt 4' in seiner Ausgangsposition verbleibt. Die Teilabschnitte 4 und 4' schließen dabei jeweils an einer Seite (im gezeigten Fall an der linken Seite) bündig mit dem jeweils zugeordneten Palettenstellplatz 2, 2' ab. Im gezeigten Fall, wo die Abschnitte 4 und 4' bündig mit den Palettenstellplätzen 2', 2" an der linken Seite abschließen, ist es ratsam, das Tor 3 ebenfalls auf die linke Seite zu öffnen bzw. die entsprechenden Teilabschnitte 4, 4', 5 nach links zu verschieben. Teilabschnitt 4 weist dabei eine Länge auf, die einer Palettenstellplatzbreite 2 und einem Sicherheitsabstand 10 entspricht; Teilabschnitt 4' weist eine Breite auf, die einem Palettenstellplatz 2" plus dem Sicherheitsabstand 9 entspricht. Der Einfachheit halber werden in der Praxis häufig die Sicherheitsabstände 10 und 9 gleich groß sein, weshalb die Teilabschnitte 4 und 4' die gleiche Breite aufweisen. Der Teilabschnitt 5 hingegen könnte breiter sein als die übrigen Teilabschnitte 4, 4', da er die Breite eines Palettenstellplatzes 2 plus den Sicherheitsabstand 8 und einem Sicherheitsabstand 9 betragen sollte. Alle drei Teilabschnitte 4, 4', 5 können dieselbe Breite aufweisen, wenn man in Kauf nimmt, dass entweder im geschlossenen Zustand kleine Lücken offen bleiben oder bei geöffnetem Zustand manche Palettenstellplätze nicht mehr ganz geschlossen sind (wie dies in den Fig. 3a bis 3d auch noch erläutert werden wird). Zum Öffnen des ersten Palettenstellplatzes 2 (des ersten Palettenstellplatzes rechts neben einem Regalsteher 7) muss nur der Teilabschnitt 5 des Tores 3 nach links verschoben werden. Zum Öffnen des mittleren Palettenstellplatzes 2' müssen wie im gezeigten Ausführungsbeispiel die Teilabschnitte 5 und 4 als Gruppe nach links verschoben werden und zum Öffnen des Palettenstellplatzes 2" auf der rechten Seite wird das ganze Tor 3 nach links verschoben bis zum rechten Ende des zweiten Palettenstellplatzes 2'. Die Distanz des Verschiebens muss so weit gewählt werden, dass der entsprechende Teilabschnitt 4, 4', 5 bzw. die Gruppen von Teilabschnitten 4, 4', 5 oder das ganze Tor 3 bündig mit dem benachbarten Palettenstellplatz 2, 2', 2" abschließt. Die lichte Breite (also die von außen für das Regalbediengerät zugängliche Breite) muss dann immer zumindest eine Palettenstellplatzbreite plus zwei Sicherheitsabstände 10, 10 bzw. 10, 9 betragen.

In den Fig. 1a und 1b ist ebenfalls deutlich erkennbar, dass keine der Paletten mit einer Torkante fluchtet. In Fig. 2a bzw. 2b wiederum ist deutlich erkennbar, dass jeweils zwei Teilabschnitte 4, 4' mit ihrer einen Kante und der dahinter liegenden Palette P₂ bzw. P₃ fluchten entlang der Fluchtlinien f gemäß Anspruch 3.

Wie im gezeigten Ausführungsbeispiel erkennbar ist der Abstand 8 zwischen zwei Palettenstellplätzen 2, 2' und 2', 2" deutlich verringert im Vergleich zum Stand der Technik. Im Idealfall beträgt der Abstand 8 nunmehr genau den Sicherheitsabstand 10. Wenn das Regalbediengerät einen Abstand 8, 9 von zumindest 60 mm links und rechts des Palettenstellplatzes zum Rangieren braucht, werden nach bekanntem Stand der Technik zwischen zwei Palettenstellplätzen 2, 2' (oder 2', 2") Abstände 8 von 2 x 60 mm gebraucht, während beim erfindungsgemäßen Regallager 1 nur mehr noch ein Abstand 8 von 60 mm erforderlich ist. Die Gesamtbreite eines Dreierabschnittes (drei Palettenstellplätze 2, 2', 2" beidseitig von Regalstehern 7 begrenzt) ergibt sich die Breite in einem Rechenbeispiel wie folgt:
Sicherheitsabstand 9 (etwa 60 mm)
Palettenstellplatz 2 (800 mm)
2 x Sicherheitsabstand 10 (2 x 60 mm)
Palettenstellplatz 2' (800 mm)
2 x Sicherheitsabstand 10 (2 x 60 mm)
Palettenstellplatz 2" (800 mm)
Sicherheitsabstand 9 (60 mm)

Die Gesamtbreite beträgt also 2760 mm (ohne der Breite der Regalsteher 7, die aber unberücksichtigt bleiben kann). Beim verbesserten Regallager 1 beträgt die Breite nur mehr 2640 mm, da anstelle des doppelten Abstandes 10 zwischen zwei Palettenstellplätzen (120 mm) nur mehr noch der einfache Abstand 10 (bzw. 8) (60 mm) erforderlich ist. Erfindungsgemäße Regallager 1 weisen etwa 250 Palettenstellplätze 2, 2', 2" in der Breite auf, was etwa 83 Toren 3 (bzw. Feldern) entspricht. Bei 83 solchen Feldern mit jeweils drei Palettenstellplätzen 2, 2', 2" beträgt die Platzersparnis 83 x 120 mm, also 9960 mm. Bezogen auf die Gesamtbreite beträgt der Gewinn etwa neun Palettenstellplätze 2, 2', 2" oder drei Felder mit je drei Palettenstellplätzen 2, 2', 2". In der Praxis können die einzelnen Werte natürlich abweichen, da die Breite der Paletten variieren können oder die Beladung der Palette andere Maßnahmen erfordert.

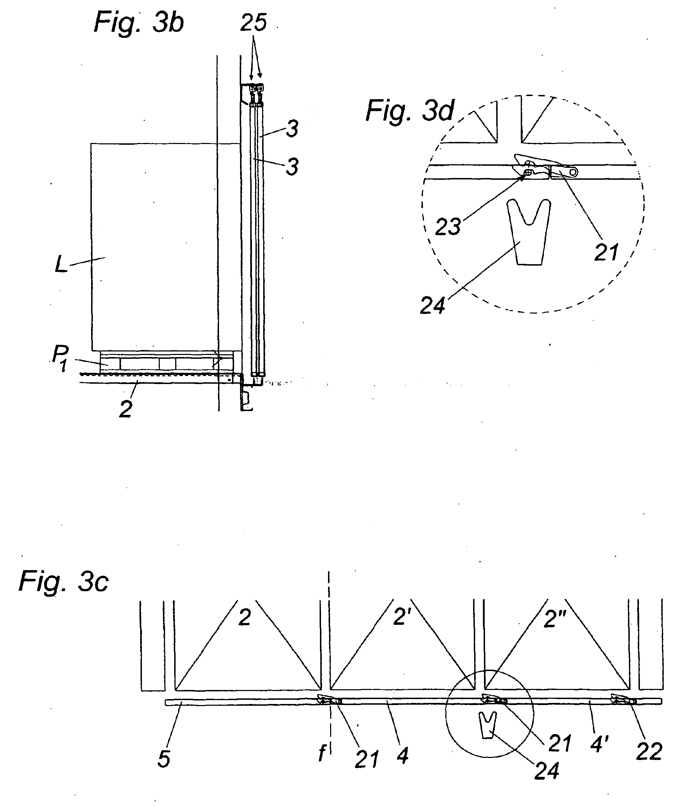

In den Fig. 3a bis 3d ist ein erfindungsgemäßes Tor eines Regallagers gezeigt, wobei in Fig. 3a eine vordere Ansicht gezeigt ist. Erkennbar sind die Teilabschnitte 4, 4', 5, die aneinander gekoppelt sind. Der Kopplungsmechanismus erfolgt mittels einer Klinke 21, 22 und einem Bolzen 23. Dabei sind die Teilabschnitte derartig angeordnet, dass ein Teilabschnitt 4' mit seinem Bolzen 23 an einer ortsfesten Klinke 22 fixiert ist. Diese ortsfeste Klinke 22 kann beispielsweise an der Schiene 25 oder am Regalsteher 7 fixiert sein. Die übrigen Teilabschnitte sind am ortsfest gekoppelten Teilabschnitt 4' ebenfalls mittels Klinken 21 und Bolzen 22 miteinander fixiert. Kommt nun ein Regalbediengerät und will zum Palettenstellplatz 2', so fährt es mit einer Gabel 24 in den Klinkenmechanismus, wodurch sich die Klinke 21, 22 öffnet bzw. den Bolzen 23 freigibt. In weiterer Folge ist der entsprechende Teilabschnitt abgekoppelt und kann geöffnet werden. Die Klinkenmechanismen und Aneinanderkoppelung sind in den Fig. 3c und 3d im Detail erläutert. Erkennbar ist außerdem in der Fig. 3a, dass die Klinke 22 an der Schiene 25 ortsfest fixiert ist, während die Klinken 21 jeweils auf einem Teilabschnitt sitzen und mit einem Bolzen 23 des benachbarten Teilabschnittes koppeln. In der Fig. 3b ist noch einmal eine Seitenansicht eines Regallagers gezeigt, wobei erkennbar ist, dass insgesamt zwei Schienen 25 vorgesehen sind. In einer Schiene läuft ein Tor 3 mit den einzelnen Teilabschnitten 4, 4', 5 und in einer zweiten Schiene läuft ein anderes Tor 3 mit ebenfalls mehreren Teilabschnitten 4, 4', 5, wobei letzteres Tor für eine zweite Gruppe nicht gezeigter Palettenstellplätze vorgesehen ist. Beim Öffnen eines Tores 3 werden die Teilabschnitte vor bzw. hinter das benachbarte Tor 3 geschoben. Erkennbar ist in dieser Darstellung auch das Lagergut L auf einer Palette P₁ die sich wiederum auf einem Palettenstellplatz 2, 2', 2" befindet.

Die einzelnen Teilabschnitte 4, 4', 5 des Tores 3 sind in diesem Ausführungsbeispiel alle etwa gleich breit. Es wird so beim Öffnen des Tores 3 in Kauf genommen, dass z.B. beim Zugriff auf Palette P₂ auf Stellplatz 2' nach verschieben von Teilabschnitt 4 und 5 die Palette P₃ auf Stellplatz 2" einen Spalt frei gelegt wird, wobei der Spalt so gering ist, dass keine Gefahr besteht, dass Lagergut L von der Palette fällt. In diesem Fall fluchtet nur mehr die linke Kante von Teilabschnitt 4 mit der dahinter liegenden linken Kante von Palettenstellplatz 2' bzw. der linken Kante von Palette P₂ entlang der Fluchtlinie f.

## Patentansprüche

1. Regallager mit mehreren Palettenstellplätzen und einem Tor, wobei das Tor (3) zumindest zwei Teilabschnitte (4, 4', 5) aufweist, die wahlweise alle gemeinsam, einzeln oder in Gruppen öffenbar sind, wobei pro Palettenstellplatz (2, 2', 2") ein Teilabschnitt (4, 4', 5) des Tores vorgesehen ist, **dadurch gekennzeichnet, dass** die Teilabschnitte (4, 4', 5) lösbar miteinander koppelbar sind, und die Teilabschnitte (4, 4', 5) in einer gemeinsamen Schiene (25) verschiebbar sind.

2. Regallager nach Anspruch 1, **dadurch gekennzeichnet, dass** die Teilabschnitte (4, 4', 5) in einer Ebene liegen.

3. Regallager nach einem der Ansprüche 1 oder 2, **dadurch gekennzeichnet, dass** bei einer Betrachtung von vorne und bei geschlossenem Tor (3) zumindest eine Kante eines Teilabschnittes (4, 4', 5) des Tores (3) mit einer Kante des dahinter liegenden Palettenstellplatzes (2, 2', 2") im Wesentlichen fluchtet.

4. Regallager nach einem der Ansprüche 1 bis 3, **dadurch gekennzeichnet, dass** das Tor (3) ein Schiebetor ist.

5. Regallager nach einem der Ansprüche 1 bis 4, **dadurch gekennzeichnet, dass** das Tor (3) in einer Schiene (25) führbar ist.

6. Regallager nach Anspruch 5, **dadurch gekennzeichnet, dass** das Tor (3) in der Schiene (25) eingehängt ist.

7. Regallager nach einem der Ansprüche 1 bis 6, **dadurch gekennzeichnet, dass** die Teilabschnitte (4, 4', 5) im Wesentlichen parallel verschiebbar sind.

8. Regallager nach einem der Ansprüche 1 bis 7, **dadurch gekennzeichnet, dass** die Teilabschnitte (4, 4', 5) nur in eine Richtung verschiebbar sind.

9. Regallager nach einem der Ansprüche 1 bis 8, **dadurch gekennzeichnet, dass** ein Teilabschnitt (4') lösbar ortsfest koppelbar ist.

10. Regallager nach einem der Ansprüche 1 bis 9, **dadurch gekennzeichnet, dass** die Koppelung über einen Klinken-Bolzen-Mechanismus erfolgt.

11. Regallager nach einem der Ansprüche 1 bis 10, **dadurch gekennzeichnet, dass** die Entkoppelung des Kopplungsmechanismus über ein Regalbediengerät oder einen Verschiebewagen erfolgt.

12. Regallager nach einem der Ansprüche 1 bis 11, **dadurch gekennzeichnet, dass** ein Teilabschnitt (5) breiter ist als die übrigen Teilabschnitte (4, 4').

13. Regallager nach einem der Ansprüche 1 bis 12, **dadurch gekennzeichnet, dass** alle Teilabschnitte (4, 4', 5) einen gemeinsamen Antrieb aufweisen.

14. Regallager nach einem der Ansprüche 1 bis 13, **dadurch gekennzeichnet, dass** zumindest zwei Palettenstellplätze (2, 2', 2") beidseitig von Regalstehern (7) begrenzt sind.

15. Regallager nach einem der Ansprüche 1 bis 14, **dadurch gekennzeichnet, dass** zwischen Palettenstellplätzen (2, 2'; 2', 2") sowie zwischen Palettenstellplatz (2; 2") und Regalsteher (7) Sicherheitsabstände (8, 9) vorgesehen sind.

16. Regallager nach Anspruch 15, **dadurch gekennzeichnet, dass** die Breite des breiteren Teilabschnittes (5) des Tores (3) die Summe aus einer Palettenstellplatzbreite plus zwei Sicherheitsabstände (8, 9) beträgt und jeder weitere Teilabschnitt (4, 4') eine Breite aufweist, die aus der Summe aus einer Palettenstellbreite plus ein Sicherheitsabstand (8, 9) beträgt.

17. Regallager nach einem der Ansprüche 1 bis 16, **dadurch gekennzeichnet, dass** die Teilabschnitte (4, 4', 5) des Tores (3) derart verschiebbar sind, dass die lichte Öffnung des Tores (3) der Summe aus einer Palettenstellplatzbreite plus zwei Sicherheitsabstände (8, 9) entspricht.

18. Regallager nach einem der Ansprüche 1 bis 17, **dadurch gekennzeichnet, dass** das Tor (3) fernsteuerbar ist.

19. Regallager nach einem der Ansprüche 1 bis 18, **dadurch gekennzeichnet, dass** das Verschieben der Teilabschnitte (4, 4', 5) durch ein Regalbediengerät oder einen Verschiebewagen steuerbar ist.

20. Regallager nach einem der Ansprüche 1 bis 19, **dadurch gekennzeichnet, dass** es ein Hochregallager ist.

21. Regallager nach Anspruch 20, **dadurch gekennzeichnet, dass** das Hochregallager mehrere übereinander angeordnete Palettenstellplätze (2, 2', 2") aufweist.

22. Regallager nach einem der Ansprüche 14 bis 21, **dadurch gekennzeichnet, dass** drei Palettenstellplätze (2, 2', 2") von Regalstehern (7) begrenzt werden.

## Claims

1. A racking arrangement comprising a plurality of pallet bays and a door, wherein the door (3) has at least two portions (4, 4', 5) which can be selectively opened altogether, individually or in groups, wherein a portion (4, 4', 5) of the door is provided for each pallet bay (2, 2', 2"), **characterised in that** the portions (4. 4', 5) can be releasably coupled together and the portions (4, 4', 5) are displaceable in a common rail (25).

2. A racking arrangement according to claim 1 **characterised in that** the portions (4, 4', 5) are disposed in one plane.

3. A racking arrangement according to one of claims 1 and 2 **characterised in that** when viewing from the front and when the door (3) is closed at least one edge of a portion (4, 4', 5) of the door (3) substantially aligns with an edge of the pallet bay (2, 2', 2") therebehind.

4. A racking arrangement according to one of claims 1 to 3 **characterised in that** the door (3) is a sliding door.

5. A racking arrangement according to one of claims 1 to 4 **characterised in that** the door (3) can be guided in a rail (25).

6. A racking arrangement according to claim 5 **characterised in that** the door (3) is suspended in the rail (25).

7. A racking arrangement according to one of claims 1 to 6 **characterised in that** the portions (4, 4', 5) are displaceable substantially parallel.

8. A racking arrangement according to one of claims 1 to 7 **characterised in that** the portions (4, 4', 5) are displaceable only in one direction.

9. A racking arrangement according to one of claims 1 to 8 **characterised in that** a portion (4') can be releasably stationarily coupled.

10. A racking arrangement according to one of claims 1 to 9 **characterised in that** coupling is effected by way of a pawl-pin mechanism.

11. A racking arrangement according to one of claims 1 to 10 **characterised in that** uncoupling of the coupling mechanism is effected by way of a racking operating device or a displacement truck.

12. A racking arrangement according to one of claims 1 to 11 **characterised in that** a portion (5) is wider than the other portions (4, 4').

13. A racking arrangement according to one of claims 1 to 12 **characterised in that** all portions (4, 4', 5) have a common drive.

14. A racking arrangement according to one of claims 1 to 13 **characterised in that** at least two pallet bays (2, 2', 2") are delimited on both sides by racking uprights (7).

15. A racking arrangement according to one of claims 1 to 14 **characterised in that** safety distances (8, 9) are provided between pallet bays (2, 2'; 2', 2") and between a pallet bay (2; 2') and a racking upright (7).

16. A racking arrangement according to claim 15 **characterised in that** the width of the wider portion (5) of the door (3) is the total of a pallet bay width plus two safety distances (8, 9) and each further portion (4, 4') is of a width which amounts to the total of a pallet bay width plus a safety distance (8, 9).

17. A racking arrangement according to one of claims 1 to 16 **characterised in that** the portions (4, 4', 5) of the door (3) are so displaceable that the internal opening of the door (3) corresponds to the total of a pallet bay width plus two safety distances (8, 9).

18. A racking arrangement according to one of claims 1 to 17 **characterised in that** the door (3) is remotely controllable.

19. A racking arrangement according to one of claims 1 to 18 **characterised in that** the displacement of the portions (4, 4', 5) is controllable by a racking operating device or a displacement truck.

20. A racking arrangement according to one of claims 1 to 19 **characterised in that** it is a high-bay racking arrangement.

21. A racking arrangement according to claim 20 **characterised in that** the high-bay racking arrangement has a plurality of mutually superposed pallet bays (2, 2', 2").

22. A racking arrangement according to one of claims 14 to 21 **characterised in that** three pallet bays (2, 2', 2") are delimited by racking uprights (7).

## Revendications

1. Magasin à rayonnage, comprenant plusieurs emplacements de pose de palette et une porte, la porte (3) présentant au moins deux tronçons partiels (4, 4', 5), susceptibles d'être ouverts, au choix, tous ensemble, individuellement ou par groupes, un tronçon partiel (4, 4', 5) de la porte étant prévu pour chaque emplacement de pose de palette (2, 2', 2"), **caractérisé en ce que** les tronçons partiels (4, 4', 5) sont susceptibles d'être couplés ensemble de manière désolidarisable, et les tronçons partiels (4, 4', 5) sont déplaçables dans un rail (25) commun.

2. Magasin à rayonnage selon la revendication 1, **caractérisé en ce que** les tronçons partiels (4, 4', 5) sont situés dans un plan.

3. Magasin à rayonnage selon la revendication 1 ou 2, **caractérisé en ce que,** en observant de l'avant et lorsque la porte (3) est fermée, au moins un bord d'un tronçon partiel (4, 4', 5) de la porte (3) est sensiblement aligné avec un bord de l'emplacement de pose de palette (2, 2', 2") situé derrière.

4. Magasin à rayonnage selon l'une des revendications 1 à 3, **caractérisé en ce que** la porte (3) est une porte coulissante.

5. Magasin à rayonnage selon l'une des revendications 1 à 4, **caractérisé en ce que** la porte est susceptible d'être guidée dans un rail (25).

6. Magasin à rayonnage selon la revendication 5, **caractérisé en ce que** la porte (3) est suspendue dans le rail (25).

7. Magasin à rayonnage selon l'une des revendications 1 à 6, **caractérisé en ce que** les tronçons partiels (4, 4', 5) sont déplaçables de manière sensiblement parallèle.

8. Magasin à rayonnage selon l'une des revendications 1 à 7, **caractérisé en ce que** les tronçons partiels (4, 4', 5) ne sont déplaçable que dans une direction.

9. Magasin à rayonnage selon l'une des revendications 1 à 8, **caractérisé en ce qu'**un tronçon partiel (4, 4', 5) est susceptible d'être accouplé de manière désolidarisable, de façon localement fixe.

10. Magasin à rayonnage selon l'une des revendications 1 à 9, **caractérisé en ce que** le couplage s'effectue par l'intermédiaire d'un mécanisme à goujon et clenche.

11. Magasin à rayonnage selon l'une des revendications 1 à 10, **caractérisé en ce que** le désaccouplement du mécanisme de couplage s'effectue par l'intermédiaire d'un appareil de desserte de rayonnage ou d'un chariot déplaçable.

12. Magasin à rayonnage selon l'une des revendications 1 à 11, **caractérisé en ce qu'**un tronçon partiel (5) est plus large que les autres tronçons partiels (4, 4').

13. Magasin à rayonnage selon l'une des revendications 1 à 12, **caractérisé en ce que** tous les tronçons partiels (4, 4', 5) présentent un entraînement commun.

14. Magasin à rayonnage selon l'une des revendications 1 à 13, **caractérisé en ce qu'**au moins deux emplacements de pose de palette (2, 2', 2") sont limités, de part et d'autre, par des profilés de fixation verticale (7).

15. Magasin à rayonnage selon l'une des revendications 1 à 14, **caractérisé en ce que** des espacements de sécurité (8, 9) sont prévus entre des emplacements de pose de palette (2, 2' ; 2', 2"), ainsi qu'entre un emplacement de pose de palette (2 ; 2") et des montants (7).

16. Magasin à rayonnage selon la revendication 15, **caractérisé en ce que** la largeur du tronçon partiel (5) le plus large de la porte (3) est égal à la somme d'une largeur d'emplacement de pose de palette, plus deux espacements de sécurité (8, 9), et chaque autre tronçon partiel (4, 4') présente une largeur composée de la somme d'une largeur de pose de palette, plus un espacement de sécurité (8, 9).

17. Magasin à rayonnage selon l'une des revendications 1 à 16, **caractérisé en ce que** les tronçons partiels (4, 4', 5) de la porte (3) sont déplaçables de manière que l'ouverture libre de la porte (3) corresponde à la somme d'une largeur d'emplacement de pose de palette, plus deux espacements de sécurité (8, 9).

18. Magasin à rayonnage selon l'une des revendications 1 à 17, **caractérisé en ce que** la porte est susceptible d'être télécommandée.

19. Magasin à rayonnage selon l'une des revendications 1 à 18, **caractérisé en ce que** le déplacement des tronçons partiels (4, 4', 5) est susceptible d'être commandé par un appareil de desserte de rayonnage ou un chariot déplaçable.

20. Magasin à rayonnage selon l'une des revendications 1 à 19, **caractérisé en ce qu'**il est un magasin à rayonnage en hauteur.

21. Magasin à rayonnage selon la revendication 20, **caractérisé en ce que** le magasin à rayonnage en hauteur présente plusieurs emplacements de pose de palette (2, 2', 2") disposés les uns au-dessus des autres.

22. Magasin à rayonnage selon l'une des revendications 1 à 21, **caractérisé en ce que** trois emplacements de pose de palette (2, 2', 2") sont limités par des montant de rayonnage (7).
